# EUROPÄISCHE PATENTSCHRIFT

(11) **EP 3 697 612 B1**
(45) Veröffentlichungstag und Bekanntmachung des Hinweises auf die Patenterteilung: **22.02.2023**
(21) Anmeldenummer: 18773199.7
(22) Anmeldetag: 26.09.2018
(51) Int. Cl.: B32B 17/10, C03C 27/12

(54) **VERBESSERTES AUSRICHTUNGS- UND VERBUNDVERFAHREN FÜR DIE HERSTELLUNG VON DÜNNEM VERBUNDGLAS AUS GLASSCHEIBEN MIT FEHLENDER PASSGENAUIGKEIT**
IMPROVED ALIGNMENT AND CONNECTION METHOD FOR THE PRODUCTION OF THIN LAMINATED GLASS MADE FROM GLASS PANELS WITHOUT EXACT FIT
PROCÉDÉ D'ORIENTATION ET DE LIAISON AMÉLIORÉ POUR LA FABRICATION DE VERRE FEUILLETÉ MINCE À PARTIR DES FEUILLES DE VERRE À PRÉCISION D'AJUSTEMENT MANQUANTE

(30) Priorität: 18.10.2017 EP 17197145
(43) Veröffentlichungstag der Anmeldung: 26.08.2020
(73) Patentinhaber: SAINT-GOBAIN GLASS FRANCE, 92400 Courbevoie (FR)
(72) Erfinder: BORCHMANN, Nikolai, 52134 Herzogenrath (DE); LÜCKE, Stefan, 32257 Bünde (DE); BREUER, Simon, 52499 Baesweiler (DE); TINGS, Nino, 52249 Eschweiler (DE)
(74) Vertreter: Hermanns, Ellen
(86) Internationale Anmeldenummer: PCT/EP2018/076100
(87) Internationale Veröffentlichungsnummer: WO 2019/076597

(56) Entgegenhaltungen:
- EP-A1- 3 189 965
- DE-A1- 3 728 284
- DE-A1- 4 106 958
- DE-A1-102006 054 736
- FR-A1- 3 012 073
- GB-A- 908 338
- US-A1- 2007 223 096

## Beschreibung

Die Erfindung betrifft ein Verfahren zur Herstellung eines Verbundglases oder einer Vorstufe davon.

Ein Verbundglas bzw. eine Verbundglasscheibe besteht aus mindestens einer ersten Scheibe oder Außenscheibe, einer zweiten Scheibe oder Innenscheibe und einer polymeren Zwischenschicht, die die erste Scheibe mit der zweiten Scheibe verbindet. Verbundglas findet z.B. als Fahrzeugscheiben oder Fensterscheiben für Bauwerke Verwendung. Verbundglas kann planes oder gebogenes Verbundglas sein.

Aus ökonomischen und ökologischen Gründen wird möglichst dünnes Verbundglas angestrebt. Unter dünnem Verbundglas wird hier ein Verbundglas verstanden, bei dem eine der beiden Glasscheiben eine Dicke von nicht mehr als 1,0 mm aufweist. Die andere Glasscheibe des Verbundglases kann Standardglasdicken aufweisen, in der Regel mit einer Dicke von mindestens 1,4 mm, z.B. 1,6 mm.

Bekannte Verfahren zur Herstellung von Verbundglas umfassen üblicherweise das Anordnen von einer ersten Scheibe, einer oder mehreren Laminierfolien und einer zweiten Scheibe, die Entlüftung der erhaltenen Anordnung unter Bildung eines Vorverbunds und Wärme- und/oder Druckbehandlung des erhaltenen Vorverbunds, um die fertige Verbundglasscheibe zu erhalten. Sofern ein gebogenes Verbundglas hergestellt werden soll, ist es ferner erforderlich, die Glasscheiben vor der Bildung der Anordnung zu biegen.

Gewöhnlich passen die verwendeten Glasscheiben in Krümmung und Form im Wesentlichen zueinander, so dass sie relativ passgenau zur Anordnung zusammengelegt und ausgerichtet werden können. Es gibt aber Fälle, bei denen die beiden Glasscheiben für die Herstellung des Verbundglases in der Geometrie eine fehlende Passgenauigkeit aufweisen, d.h. sich in der Krümmung und/oder in lokalen Bereichen in der Form unterscheiden. Dies kann sich z.B. aufgrund von Unzulänglichkeiten im Fertigungsprozess der verwendeten Glasscheiben ergeben oder prozesstechnisch bedingt sein.

Eine fehlende Passgenauigkeit in der Geometrie der beiden Glasscheiben führt dazu, dass die sich beim Zusammenlegen der Scheiben ergebende Anordnung Zwischenräume bzw. Spalten aufweist, die Ausrichtung der Anordnung erschwert wird und sich Probleme bei den nachfolgenden Fertigungsschritten zur Herstellung des Verbundglases ergeben. Es versteht sich, dass diese Probleme umso größer werden, je stärker die fehlende Passgenauigkeit in der Geometrie ausgeprägt ist. Die Folgen können z.B. Fehler oder Ungenauigkeiten in der Ausrichtung der Scheiben im erhaltenen Verbundglas sein. Wenn die fehlende Passgenauigkeit zu ausgeprägt ist, ist es mit den bekannten Verfahren nach dem Stand der Technik nicht mehr möglich, die Scheiben mit der erforderlichen Präzision zueinander auszurichten.

EP 3189965 A1 betrifft eine laminierte Platte, die eine erste und zweite Scheibe umfasst, wobei die erste Scheibe dicker als die zweite Scheibe ist, die erste Scheibe im äußeren Umfang einen linear abgeschrägten Teil aufweist und die zweite Scheibe versetzt auf einer verlängerten Linie des linearen abgeschrägten Teils der ersten Scheibe positioniert ist. Die Krümmung der ersten und der zweiten Scheibe kann verschieden sein.

FR 3012073 A1 betrifft eine gekrümmte Verbundglaseinheit mit einer äußeren Glasscheibe und einer inneren Glasscheibe, wobei die innere Glasscheibe dünner als die äußere Glasscheibe ist, und ein Verfahren zur Herstellung des Verbundglases, das ein Kaltbiegen der inneren Glasscheibe beinhalten kann.

GB 908338 A beschreibt ein Verfahren zur Herstellung von ebenem oder gekrümmtem Verbundglas, bei dem eine Anordnung von zwei dünnen Glasscheiben und Zwischenschichten zwischen zwei Abdeckplatten mit Hilfe von Klammern oder anderen Greifmitteln um den ganzen Umfang der Anordnung herum fixiert wird und dann die so fixierte Anordnung in einem Autoklav laminiert wird.

US 2007/223096 A1 beschreibt einen Reflektor, bei dem Komponenten eines Glaslaminats mit Klammern fixiert werden.

DE 102006054736 A1 betrifft ein Verfahren zur Herstellung von Verbundglas, bei dem zwei Glasplatten mit je einer Folienschicht zu einem Glaspaket aufeinandergelegt werden und das Glaspaket zu einer Laminiervorrichtung transportiert und dort unter Vakuum und Aufschmelzen der Folienschicht zu Verbundglas laminiert wird, wobei das Glaspaket nach dem Aufeinanderlegen und vor dem Transport zumindest partiell erwärmt wird, um die Glasplatten relativ zur Folie zu fixieren. Bei der Fixierung kann mittels Andruckrollen ein Druck angelegt werden.

DE 3728284 A1 beschreibt das Ausrichten zweier zu verbindender Glasscheiben mittels eines Ausrichttisches und Justieranschlägen.

DE 4106958 A1 betrifft ein Verfahren zum Herstellen gekrümmter, miteinander verbundener Scheiben aus Glas mit einem zwischen den Scheiben eingelegten Abstandselement, wobei jede Scheibe mit einer Kontaktfläche in Kontakt gebracht wird und nach lagegenauer Ausrichtung relativ zu dieser Kontaktfläche mit ihr fest verbunden wird.

Der Erfindung liegt allgemein die Aufgabe zu Grunde, ein Verfahren zum Herstellen eines dünnen Verbundglases bereitzustellen, das die vorstehend erläuterten Nachteile bei den Verfahren nach dem Stand der Technik überwindet.

Der Erfindung stellt sich insbesondere die Aufgabe ein Verfahren zum Herstellen eines dünnen Verbundglases bereitzustellen, das eine präzise und wiederholbare Ausrichtung und Fixierung der Anordnung der Glasscheiben unter Bildung einer fixierten Anordnung beim automatischen, halbautomatischen oder manuellen Zusammenbau des dünnen Verbundglases ermöglicht. Insbesondere soll das Verfahren für den Zusammenbau eines dünnen Verbundglases mit zwei Glasscheiben mit fehlender Passgenauigkeit in der Geometrie geeignet sein.

Die Aufgabe wird erfindungsgemäß durch ein Verfahren nach Anspruch 1 gelöst. Bevorzugte Ausführungsformen der Erfindung gehen aus den abhängigen Ansprüchen hervor.

Das erfindungsgemäße Verfahren ermöglicht die Ausrichtung und Fixierung der Anordnung von Glasscheiben mit fehlender Passgenauigkeit unter Bildung einer fixierten Anordnung für die Herstellung eines dünnen Verbundglases mit hoher Präzision und Wiederholbarkeit für die automatische, halbautomatische oder manuelle Fertigung.

Das erfindungsgemäße Verfahren eignet sich insbesondere bei der Verwendung von zwei Glasscheiben, die eine fehlende Passgenauigkeit in der Geometrie besitzen. Die vorstehend beschriebenen Schwierigkeiten, die bei den bekannten Verfahren durch solche fehlende Passgenauigkeit verursacht werden, können durch das erfindungsgemäße Verfahren überwunden werden. Selbst Glasscheibenpaare mit starker Ausprägung der fehlenden Passgenauigkeit können in dem erfindungsgemäßen Verfahren verarbeitet werden.

Durch das erfindungsgemäße Verfahren kann fehlende Passgenauigkeit teilweise verringert oder sogar ganz ausgeglichen werden und Fehler in der Ausrichtung im Verbundglas sind gegenüber herkömmlichen Verfahren deutlich verringert.

Dementsprechend betrifft die Erfindung ein Verfahren zum Herstellen eines Verbundglases oder einer Vorstufe davon unter Verwendung einer ersten Glasscheibe mit einer Dicke von mindestens 1,4 mm und einer zweiten Glasscheibe mit einer Dicke von nicht mehr als 1,0 mm, wobei sich die erste Glasscheibe und die zweite Glasscheibe in der Krümmung und/oder in lokalen Bereichen in der Form unterscheiden und wobei das Verfahren folgende Schritte umfasst:
a) das Ausrichten einer Anordnung, umfassend die erste Glasscheibe, die zweite Glasscheibe und mindestens eine zwischen der ersten und zweiten Glasscheibe befindliche Laminierfolie, durch Positionieren mindestens eines Seitenrandes der Anordnung an mindestens ein Anschlagelement;
b) das Vorfixieren der ausgerichteten Anordnung an mindestens zwei Stellen an dem positionierten Seitenrand der Anordnung durch ein oder mehrere Fixierelemente und Erwärmen, wonach das oder die Fixierelemente wieder entfernt werden; und
c) das Bilden einer fixierten Anordnung durch Hindurchleiten der vorfixierten Anordnung durch eine Walzenanordnung, insbesondere eine Kalanderwalzenanordnung, mit dem vorfixierten Seitenrand der Anordnung voraus, wobei die Anordnung während des Hindurchleitens zumindest abschnittsweise erwärmt wird.

Im Folgenden wird die Erfindung im Einzelnen erläutert.

Unter der Vorstufe von einem Verbundglas wird hier insbesondere die nach Schritt c) erhaltene fixierte Anordnung oder der entlüftete Vorverbund, der nach dem optionalen Entlüften der nach Schritt c) erhaltenen fixierten Anordnung erhalten wird, verstanden.

Die Begriffe Krümmung bzw. Biegung und gekrümmt bzw. gebogen sind hier synonyme Begriffe.

Unter einer Walzenanordnung ist eine Anordnung umfassend mindestens ein Rollenpaar aus zwei gegenüberliegenden Rollen zu verstehen.

Das Verbundglas kann plan oder gebogen sein, wobei ein gebogenes Verbundglas bevorzugt ist. Das Verbundglas kann in einer oder in mehreren Richtungen des Raumes gebogen sein, wie es z.B. für Kraftfahrzeugscheiben üblich ist. Typische Krümmungsradien können z.B. im Bereich von etwa 20 mm bis etwa 40 m, bevorzugt 50 mm bis 30 m, liegen.

In dem erfindungsgemäßen Verfahren wird eine erste Glasscheibe mit einer Dicke von mindestens 1,4 mm und eine zweite Glasscheibe mit einer Dicke von nicht mehr als 1,0 mm verwendet. Das Verfahren betrifft somit die Herstellung eines dünnen Verbundglases. Die erste Glasscheibe kann plan oder gekrümmt sein. Die zweite Glasscheibe kann plan oder gekrümmt sein. Glasscheiben können z.B. durch ein Schwerkraftbiegeverfahren gekrümmt werden.

Die verwendete erste Glasscheibe und die verwendete zweite Glasscheibe unterscheiden sich in der Krümmung und/oder in lokalen Bereichen in der Form. Wie bereits erwähnt stellt dies eine fehlende Passgenauigkeit in der Geometrie der beiden Glasscheiben dar, die zum Verbundglas laminiert werden sollen. Diese Unterschiede in der Krümmung und/oder in lokalen Bereichen in der Form führen gewöhnlich zur Ausbildung von Zwischenräumen oder Spalten in der Anordnung, wenn die beiden Glasscheiben mit der mindestens einen Laminierfolie dazwischen zu der Anordnung übereinandergelegt werden.

Bei einer unterschiedlichen Krümmung kann die erste Glasscheibe eine stärkere Krümmung aufweisen als die zweite Glasscheibe und umgekehrt. Eine unterschiedliche Krümmung der ersten und zweiten Glasscheibe schließt auch Fälle ein, bei der eine der beiden Glasscheiben plan ist und die andere gekrümmt ist. Der Unterschied in der Krümmung der beiden Glasscheiben kann beträchtlich sein.

Unterschiede der verwendeten ersten Glasscheibe und zweiten Glasscheibe in lokalen Bereichen in der Form stellen lokale Formabweichungen oder Formdefekte dar. Es kann sich dabei beispielsweise um Ausbuchtungen, Wellen oder Vertiefungen sowie Uneinheitlichkeiten in der Dicke handeln, die in der oder den Glasscheiben vorhanden sind. Diese können z.B. prozesstechnisch bedingt sein oder sich durch Fehler im Herstellungsprozess ergeben. Solche Fehler in lokalen Bereichen in der Form können auch bei Verwendung von zwei planen Glasscheiben zu fehlender Passgenauigkeit in der Geometrie führen.

In bevorzugten Ausführungsformen liegt eine unterschiedliche Krümmung der ersten und zweiten Glasscheibe vor, wobei gegebenenfalls zusätzlich in lokalen Bereichen Unterschiede in der Form bestehen.

In einer besonders bevorzugten Ausführungsform ist die verwendete erste Glasscheibe gekrümmt und die verwendete zweite Glasscheibe ist nicht gekrümmt bzw. plan oder weist eine geringere Krümmung als die erste Glasscheibe auf. Der Unterschied in der Krümmung der beiden Glasscheiben kann dabei beträchtlich sein. In extremen Fällen weist die dünnere zweite Glasscheibe keine Krümmung auf und die dickere erste Glasscheibe weist eine Krümmung auf, die so gestaltet ist, dass das finale Produkt (Verbundglas) möglichst genau mit der gewünschten CAD-Form (computer-aided-design-Form) übereinstimmt.

Die erste Glasscheibe weist bevorzugt eine Dicke im Bereich von 1,4 mm bis 5,0 mm, bevorzugter von 1,6 mm bis 2,2 mm, auf. Die zweite Glasscheibe weist bevorzugt eine Dicke im Bereich von 0,3 bis 1,0 mm, bevorzugter von 0,5 bis 0,8 mm, auf.

Die erste Glasscheibe und die zweite Glasscheibe können aus dem gleichen Material oder aus verschiedenem Material sein. Die Glasscheiben können aus anorganischem Glas und/oder organischem Glas, d.h. organischen Polymeren, gebildet sein. In einer bevorzugten Ausführungsform sind die erste Glasscheibe und/oder die zweite Glasscheibe aus Flachglas, Quarzglas, Borosilikatglas, Kalk-Natron-Glas, Alkalialuminosilikatglas, Polycarbonat und/oder Polymethacrylat gebildet.

Die erste und/oder zweite Glasscheibe können aus nicht vorgespanntem Glas, thermisch oder chemisch teilvorgespanntem Glas (TVG) oder thermisch (ESG) oder chemisch vorgespanntem Glas gebildet sein.

Für die Erstellung der Anordnung wird mindestens eine Laminierfolie verwendet, die sich in der Anordnung zwischen der ersten und zweiten Glasscheibe befindet. Die mindestens eine Laminierfolie ist insbesondere eine Polymerfolie, bevorzugt eine thermoplastische Polymerfolie. Es werden in der Regel eine oder mehrere Laminierfolien verwendet. Die mindestens eine Laminierfolie dient zum Verbinden der ersten Glasscheibe und der zweiten Glasscheibe durch Verkleben, um das Laminat bzw. Verbundglas zu bilden.

Es können eine oder mehrere Laminierfolien, z.B. 1, 2 oder 3 Laminierfolien, verwendet werden. Solche Laminierfolien sind dem Fachmann gut bekannt und im Handel erhältlich. Die Laminierfolie, z.B. eine PVB-Folie, weist z.B. eine Dicke von 0,1 bis 2 mm und bevorzugter von 0,3 bis 1 mm auf, typischerweise 0,38 mm oder 0,76 mm oder 0,81 mm oder 0,84 mm.

Die Laminierfolie kann z.B. aus Polyvinylbutyral (PVB), Ethylenvinylacetat (EVA), Polyurethan, einem Copolymer davon, einem Derivat davon oder Mischungen davon gebildet sein, wobei PVB-Folien besonders bevorzugt sind. Neben dem Polymer kann die Laminierfolie gegebenenfalls übliche Additive, wie z.B. Weichmacher oder Füllstoffe, enthalten.

Neben der mindestens einen Laminierfolie können für die Anordnung gegebenenfalls eine oder mehrere, von der Laminierfolie verschiedene zusätzliche Polymerfolien eingesetzt werden, die ebenfalls zwischen der ersten und zweiten Glasscheibe angeordnet werden, z.B. eine infrarotreflektierende Polymerfolie, z.B. eine Polyesterfolie, die gegebenenfalls eine Beschichtung aufweist, z.B. aus Silber.

Zur Bildung der Anordnung, umfassend die erste Glasscheibe, die zweite Glasscheibe und mindestens eine zwischen der ersten und zweiten Glasscheibe befindliche Laminierfolie, werden die erste Glasscheibe, die mindestens eine Laminierfolie und die zweite Glasscheibe übereinandergelegt. Wie gesagt können gegebenenfalls eine oder mehrere zusätzliche Polymerfolien zwischen den beiden Glasscheiben angeordnet werden.

Das erfindungsgemäße Verfahren umfasst als Schritt a) das Ausrichten der Anordnung, umfassend die erste Glasscheibe, die zweite Glasscheibe und die mindestens eine zwischen der ersten und zweiten Glasscheibe befindliche Laminierfolie, durch Positionieren mindestens eines Seitenrandes der Anordnung an mindestens ein Anschlagelement.

Die Ausrichtung der Anordnung ist ein übliches Verfahren bei der Herstellung von Verbundgläsern und der Fachmann ist mit den erforderlichen Maßnahmen vertraut. Es können abhängig von der Art der Anschlagelemente ein oder mehrere Anschlagelemente verwendet werden, zweckmäßigerweise mindestens drei. Es können alle üblichen Anschlagelemente verwendet werden, z.B. vertikal aufgestellte Zylinder, die am Boden oder einer üblichen Anschlagvorrichtung in der gewünschten Anordnung fixiert sind.

Zur Ausrichtung wird mindestens ein Seitenrand der Anordnung an mindestens ein Anschlagelement positioniert, indem der Seitenrand gegen das Anschlagelement gedrückt wird, so dass der Seitenrand an dem Anschlagelement anliegt. Grundsätzlich kann ein beliebiger Seitenrand zum Positionieren an dem Anschlagelement ausgewählt werden, zweckmäßigerweise wird aber der Seitenrand mit der größten Bedeutung gewählt, da an dem positionierten Seitenrand die höchste Genauigkeit in der Ausrichtung erreicht wird. Bei Seitenfenstern für Autos ist z.B. der Seitenrand mit der größten Bedeutung der obere Seitenrand, da dieser im eingebauten Zustand sichtbar sein kann.

In der Regel ist es bevorzugt, dass mindestens zwei, gewöhnlich mindestens drei, Anschlagelemente so angeordnet sind, dass der vorzufixierende Seitenrand an mindestens einem, bevorzugt mindestens zwei Anschlagelementen positioniert werden kann, und ein den vorzufixierenden Seitenrand berührender Seitenrand an mindestens einem Anschlagelement positioniert werden kann, um eine genaue Ausrichtung zu erreichen.

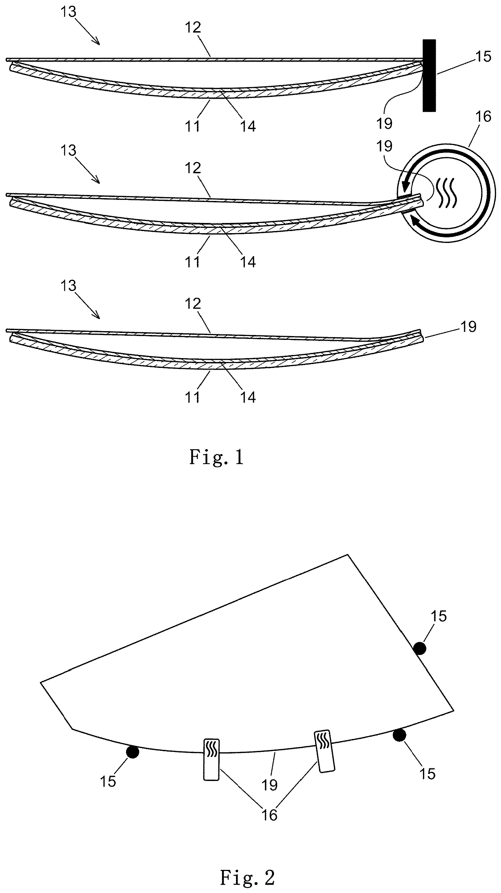

In einer bevorzugten Ausführungsform werden zum Ausrichten der Anordnung mindestens drei Anschlagelemente eingesetzt, die so angeordnet sind, dass der vorzufixierende Seitenrand der Anordnung an mindestens zwei Anschlagelementen positioniert wird und ein anderer, den vorzufixierenden Seitenrand berührender Seitenrand der Anordnung an mindestens einem Anschlagelement positioniert wird. Eine solche Ausführungsform ist in Fig. 2 veranschaulicht.

Nach dem Ausrichten erfolgt in Schritt b) das Vorfixieren der ausgerichteten Anordnung an zwei oder mehr Stellen an dem positionierten Seitenrand der Anordnung durch ein oder mehrere, gewöhnlich mindestens zwei, Fixierelemente und Erwärmen.

Das Fixierelement kann gegebenenfalls beheizbar sein. Als Fixierelement können alle, dem Fachmann vertrauten Mittel zur mechanischen Fixierung verwendet werden. Bei dem Fixierelement kann es sich z.B. um eine Klammer handeln. Die Klammer kann beheizbar sein. Durch das Fixierelement kann eine Kraft senkrecht zur Glasoberfläche aufgebracht werden.

An den mindestens zwei Stellen an dem positionierten Seitenrand werden das oder die Fixierelemente angebracht und die Stellen werden punktuell bzw. lokal unter Aufbringung einer Kraft normal zur Glasoberfläche erwärmt, wodurch die Vorfixierung der Anordnung erreicht wird. Die punktuelle Erwärmung an den besagten Stellen kann z.B. durch Heißluft und/oder ein oder mehrere beheizte Fixierelemente, insbesondere beheizte Klammern, erfolgen. Zur Erzeugung der Heißluft können z.B. Heißluftgebläse verwendet werden.

Durch die punktuelle Erwärmung der mindestens zwei Stellen wird die Laminierfolie an diesen Stellen klebfähig, so dass durch die lokale Verklebung die Vorfixierung erreicht wird. Die zweckmäßige Temperatur hängt naturgemäß von der Art der eingesetzten Laminierfolie ab. Die Anordnung wird an den zu fixierenden Stellen z.B. auf eine Temperatur im Bereich von 30 °C bis 140 °C, bevorzugt von 40 °C bis 100 °C, erwärmt. Da die Zeit zur Erwärmung möglichst kurz gehalten werden soll, ist die Temperatur der Heißluft und/oder der beheizten Fixierelemente meist deutlich höher, um die gewünschte Temperatur in der Anordnung möglichst schnell zu erreichen.

Nach der Vorfixierung der Anordnung werden das oder die Fixierelemente wieder von der Anordnung entfernt, wodurch die vorfixierte Anordnung erhalten wird.

Anschließend erfolgt in Schritt c) das Bilden einer fixierten Anordnung durch Hindurchleiten der vorfixierten Anordnung durch eine Walzenanordnung mit dem vorfixierten Seitenrand der Anordnung voraus, wobei die Anordnung während des Hindurchleitens zumindest abschnittsweise erwärmt wird.

Bevorzugt weist die eingesetzte Walzenanordnung mehrere nebeneinander angeordnete Rollenpaare aus zwei einander gegenüberliegenden Rollen auf, wobei gegebenenfalls mindestens ein Rollenpaar beheizbar ist.

Besonders bevorzugt handelt es sich bei der Walzenanordnung um eine Kalanderwalzenanordnung. Diese weist bevorzugt mehrere nebeneinander angeordnete Rollenpaare aus zwei einander gegenüberliegenden Rollen auf, wobei gegebenenfalls mindestens ein Rollenpaar beheizbar ist.

Die Anordnung wird während des Hindurchleitens zumindest abschnittsweise erwärmt. In den erwärmten Abschnitten der Anordnung werden die beiden Glasscheiben durch die dort klebfähige Laminierfolie verbunden, wodurch die fixierte Anordnung erhalten wird. Es ist insbesondere bevorzugt, dass die Anordnung während des Hindurchleitens nur abschnittsweise, also nicht vollflächig sondern teilflächig bzw. streifenweise, erwärmt wird. Auf diese Weise wird die Anordnung nicht vollflächig, sondern lediglich abschnittsweise verbunden, wodurch eine im Anschluss gegebenenfalls durchgeführte Entlüftung erleichtert wird.

Die zumindest abschnittsweise vorfixierte Anordnung wird in Schritt c) bevorzugt durch Heißluft und/oder ein oder mehrere beheizte Rollenpaare der Walzenanordnung, insbesondere Kalanderwalzenanordnung, erwärmt. Zur Erzeugung der Heißluft können z.B. Heißluftgebläse verwendet werden. Die zweckmäßige Temperatur hängt naturgemäß von der Art der eingesetzten Laminierfolie ab. Die Anordnung wird in Schritt c) zumindest abschnittsweise, bevorzugt nur abschnittsweise, z.B. auf eine Temperatur im Bereich von 30 °C bis 140 °C, bevorzugt von 40 °C bis 100 °C, erwärmt.

In einer bevorzugten Ausführungsform erfolgt eine abschnittsweise bzw. streifenweise Erwärmung der vorfixierten Anordnung durch Verwendung einer Walzenanordnung, insbesondere einer Kalanderwalzenanordnung, mit mehreren nebeneinander angeordneten Rollenpaaren, wobei ein Teil der Rollenpaare nicht beheizt wird und mindestens ein Rollenpaar beheizt wird. Sofern zwei oder mehr Rollenpaare beheizt werden, befindet sich jeweils zwischen zwei beheizten Rollenpaaren bevorzugt mindestens ein nicht beheiztes Rollenpaar.

Der auf die vorfixierte Anordnung in der Walzenanordung, insbesondere Kalanderwalzenanordnung, ausgeübte Anpressdruck, relativ zu dem atmosphärischen Druck, kann z.B. 2 bis 5 bar, bevorzugt 3 bis 4 bar, betragen.

Durch das Hindurchleiten der vorfixierten Anordnung durch die Walzenanordnung, die insbesondere als Kalanderwalzenanordnung ausgebildet sein kann, unter zumindest abschnittweisen, bevorzugt abschnittsweisen, Erwärmen, wird die fixierte Anordnung gebildet.

Durch das Hindurchleiten der vorfixierten Anordnung durch die Walzenanordnung, die insbesondere als Kalanderwalzenanordnung ausgebildet sein kann, kann sich ein weiterer Effekt ergeben. Dieser besteht darin, dass die fehlende Passgenauigkeit in der Geometrie der beiden Glasscheiben ausgeglichen werden kann. Insbesondere können vorher bestehende Unterschiede in der Krümmung der beiden Glasscheiben ausgeglichen werden. In einer bevorzugten Ausführungsform werden bestehende Unterschiede in der Krümmung der ersten und zweiten Glasscheibe durch die Behandlung in Schritt c) ausgeglichen, indem die Krümmung der dünneren zweiten Glasscheibe ganz oder teilweise an die Krümmung der dickeren ersten Glasscheibe angepasst wird.

Das erfindungsgemäße Verfahren kann ferner gegebenenfalls und bevorzugt einen Entlüftungsschritt umfassen, bei dem die in Schritt c) erhaltene fixierte Anordnung einem Entlüftungsprozess unter Bildung eines Vorverbunds unterworfen wird. Die Entlüftung kann nach den bekannten Verfahren erfolgen, z.B. durch eine Kalanderbehandlung oder durch ein Vakuumverfahren, wobei ein Vakuumverfahren bevorzugt ist. Beim Vakuumverfahren wird an die fixierte Anordnung, die z.B. in einen Vakuumsack oder einem Vakuumrahmen platziert wurde, ein Vakuum angelegt und Restluft aus der fixierten Anordnung evakuiert. Bei dem Entlüftungsprozess, bevorzugt durch das Vakuumverfahren, erfolgt in der Regel auch eine Erwärmung der fixierten Anordnung.

Das erfindungsgemäße Verfahren kann ferner gegebenenfalls und bevorzugt eine Wärme- und/oder Druckbehandlung des nach der Entlüftung erhaltenen Vorverbunds umfassen, um das Verbundglas fertigzustellen.

Diese Wärme- und/oder Druckbehandlung des nach der Entlüftung erhaltenen Vorverbundes zur Bildung des Verbundglases kann nach irgendeinem der dem Fachmann gut bekannten Verfahren durchgeführt werden, wobei das Autoklavverfahren bevorzugt ist.

Das Verbundglas ist bevorzugt eine Fahrzeugscheibe, besonders bevorzugt eine Kraftfahrzeugscheibe. Das Fahrzeug kann ein Land-, Schiffs- oder Luftfahrzeug sein, insbesondere ein Personenkraftwagen. Das Verbundglas ist bevorzugt eine Seitenscheibe für ein Fahrzeug, bevorzugt für ein Kraftfahrzeug.

Die Erfindung wird nachfolgend anhand von nicht einschränkenden Ausführungsbeispielen unter Bezug auf die beigefügten Zeichnungen näher erläutert.

In diesen zeigen:
- Fig. 1: schematisch eine Seitenansicht der ausgerichteten bzw. vorfixierten Anordnung in Schritt a) und b) des Verfahrens;
- Fig. 2: schematisch eine Draufsicht auf die ausgerichtete Anordnung während des Vorfixierens in Schritt b) des Verfahrens;
- Fig. 3: schematisch eine Seitenansicht der vorfixierten Anordnung zu Beginn von Schritt c) des Verfahrens;
- Fig. 4: schematisch eine Draufsicht auf die vorfixierte Anordnung zu Beginn von Schritt c) des Verfahrens;
- Fig. 5: schematisch eine Seitenansicht der Anordnung bzw. der fixierten Anordnung gegen Ende von Schritt c) des Verfahrens.

Fig. 1 zeigt schematisch eine Seitenansicht der Anordnung 13, umfassend eine erste Glasscheibe 11, eine zweite Glasscheibe 12 und eine Laminierfolie 14, z.B. aus PVB, während der Schritte a) und b) des Verfahrens, für die Herstellung einer Fahrzeugfensterscheibe. Die erste Glasscheibe 11 weist eine Dicke von 1,6 mm und eine deutliche Krümmung auf. Die Laminierfolie 14 befindet sich zwischen der ersten Glasscheibe 11 und der zweiten Glasscheibe 12. Die zweite Glasscheibe 12 weist eine Dicke von nicht mehr als 1,0 mm, z.B. 0,6 mm, auf und ist plan bzw. nicht gekrümmt. Aufgrund der unterschiedlichen Krümmung weisen die Glasscheiben 11, 12 eine fehlende Passgenauigkeit in der Geometrie auf. Dadurch bildet sich ein Spalt in der Anordnung 13.

Die obere Abbildung von Fig. 1 zeigt die Ausrichtung der Anordnung 13 durch Positionierung des Seitenrandes 19 der Anordnung 13 an einem Ausrichtelement 15. Die mittlere Abbildung von Fig. 1 zeigt schematisch die Vorfixierung einer Stelle des Seitenrandes 19 mit einer an dieser Stelle angebrachten beheizbaren Klammer als beheizbares Fixierelement 16 zur punktuellen Erwärmung der Anordnung 13. Die untere Abbildung von Fig. 1 zeigt die vorfixierte Anordnung 13 mit der verbundenen Stelle am Seitenrand 19.

Fig. 2 zeigt eine Draufsicht auf die ausgerichtete Anordnung 13 in Fig. 1. Es ist ersichtlich, dass der Seitenrand 19 an zwei zylinderförmigen Anschlagelementen 15 positioniert ist und ein weiterer, den Seitenrand 19 berührender Seitenrand an einem dritten zylinderförmigen Anschlagelement 15 positioniert ist, wodurch die Anordnung 13 ausgerichtet worden ist. An der ausgerichteten Anordnung 13 sind an zwei Stellen an dem an den zwei Anschlagelementen positionierten Seitenrand 19 beheizbare Klammern als beheizbares Fixierelement 16 angebracht. Durch die beheizten Klammern können die zwei Stellen lokal verbunden werden, um die Vorfixierung zu erhalten.

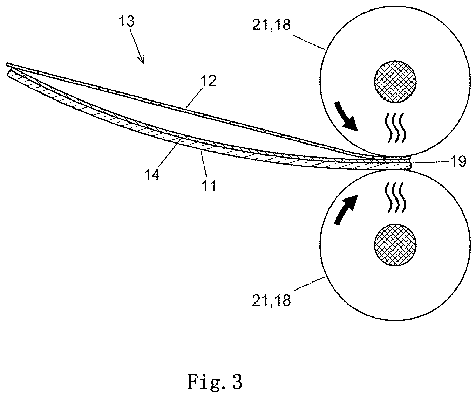

Fig. 3 zeigt die Weiterverarbeitung der vorfixierten Anordnung 13 zu Beginn von Schritt c). Die vorfixierte Anordnung 13 wird mit dem vorfixierten Seitenrand 19 voraus durch eine Walzenanordnung 18 geleitet. Die Seitenansicht zeigt ein beheizbares Rollenpaar 21 aus zwei einander gegenüberliegenden Rollen. Die in Fig. 3 gezeigte Walzenanordnung 18 kann insbesondere eine Kalanderwalzenanordnung sein.

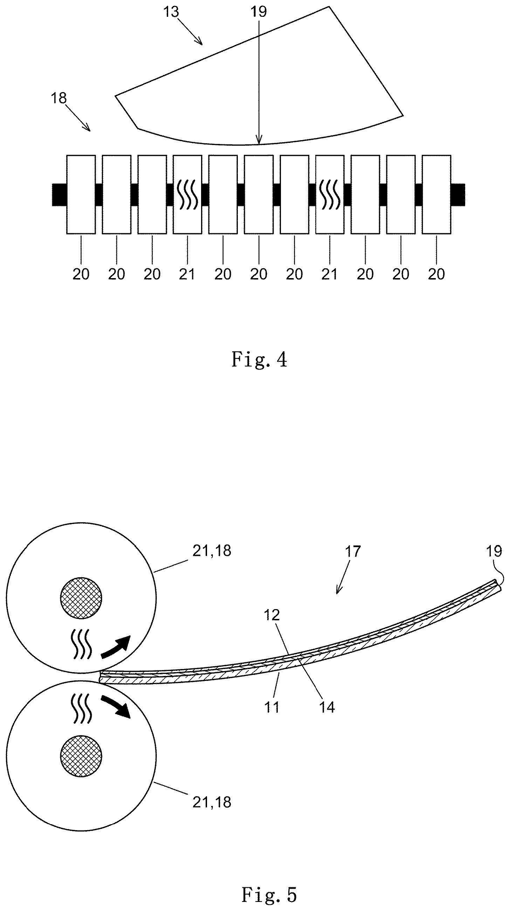

Fig. 4 zeigt das Gleiche wie Fig. 3 in der Draufschicht. Die Walzenanordnung 18 weist mehrere nebeneinander angeordnete Rollenpaare 20, 21 auf, wobei die Walzenanordnung 18 zwei beheizbare Rollenpaare 21 und neun nicht beheizbare Rollenpaare 20 umfasst. Die Leitung der vorfixierten Anordnung 13 durch die Walzenanordnung 18 erfolgt senkrecht zu der Achse, auf der die Rollenpaare 20, 21 nebeneinander angeordnet sind. Die in Fig. 4 gezeigte Walzenanordnung 18 kann insbesondere eine Kalanderwalzenanordnung sein.

Fig. 5 zeigt eine Seitenansicht der aus der Walzenanordnung 18 herauskommenden fixierten Anordnung 17 gemäß Schritt c) des Verfahrens. Durch die Walzbehandlung wurde die fehlende Passgenauigkeit in der Geometrie der beiden Glasscheiben 11, 12 ausgeglichen. Die beiden Glasscheiben 11, 12 weisen nun dieselbe Krümmung auf und sind passgenau verbunden. Der Spalt der vorfixierten Anordnung 13 vor der Walzbehandlung ist verschwunden. Bevorzugt handelt es sich bei der Walzbehandlung um eine Kalanderbehandlung.

Die gebildete fixierte Anordnung 17 kann gemäß den üblichen Verfahren einem Entlüftungsverfahren und einer Wärme- und/oder Druckbehandlung unterworfen werden, um das fertige Verbundglas zu erhalten.

### Bezugszeichenliste

- 11: erste Glasscheibe
- 12: zweite Glasscheibe
- 13: Anordnung
- 14: Laminierfolie
- 15: Anschlagelement
- 16: Fixierelement
- 17: Fixierte Anordnung
- 18: Walzenanordnung
- 19: Seitenrand
- 20: Rollenpaar
- 21: Beheizbares Rollenpaar

## Patentansprüche

1. Verfahren zum Herstellen eines Verbundglases oder einer Vorstufe davon unter Verwendung einer ersten Glasscheibe (11) mit einer Dicke von mindestens 1,4 mm und einer zweiten Glasscheibe (12) mit einer Dicke von nicht mehr als 1,0 mm, wobei sich die erste Glasscheibe (11) und die zweite Glasscheibe (12) in der Krümmung und/oder in lokalen Bereichen in der Form unterscheiden und wobei das Verfahren folgende Schritte umfasst:
a) das Ausrichten einer Anordnung (13), umfassend die erste Glasscheibe (11), die zweite Glasscheibe (12) und mindestens eine zwischen der ersten und zweiten Glasscheibe befindliche Laminierfolie (14), durch Positionieren mindestens eines Seitenrandes (19) der Anordnung (13) an mindestens ein Anschlagelement (15);
b) das Vorfixieren der ausgerichteten Anordnung (13) an mindestens zwei Stellen an dem positionierten Seitenrand (19) der Anordnung (13) durch ein oder mehrere Fixierelemente (16) und Erwärmen, wonach das oder die Fixierelemente (16) wieder entfernt werden; und
c) das Bilden einer fixierten Anordnung (17) durch Hindurchleiten der vorfixierten Anordnung (13) durch eine Walzenanordnung (18) umfassend mindestens ein Rollenpaar (20) aus zwei gegenüberliegenden Rollen mit dem vorfixierten Seitenrand (19) der Anordnung (13) voraus, wobei die Anordnung (13) während des Hindurchleitens zumindest abschnittsweise erwärmt wird.

2. Verfahren nach Anspruch 1, wobei die verwendete erste Glasscheibe (11) gekrümmt ist und die verwendete zweite Glasscheibe (12) nicht gekrümmt ist oder eine geringere Krümmung als die erste Glasscheibe (11) aufweist.

3. Verfahren nach einem der vorherigen Ansprüche, wobei die erste Glasscheibe (11) eine Dicke im Bereich von 1,4 mm bis 5,0 mm, besonders bevorzugt von 1,6 mm bis 2,2 mm, und/oder die zweite Glasscheibe (12) eine Dicke im Bereich von 0,3 bis 1,0 mm, bevorzugt von 0,5 bis 0,8 mm, aufweist.

4. Verfahren nach einem der vorherigen Ansprüche, wobei das Fixierelement (16) eine Klammer ist, die gegebenenfalls beheizbar ist.

5. Verfahren nach einem der vorherigen Ansprüche, wobei die Walzenanordnung (18) mehrere nebeneinander angeordnete Rollenpaare (20) aus zwei einander gegenüberliegenden Rollen aufweist, wobei gegebenenfalls mindestens ein Rollenpaar beheizbar ist.

6. Verfahren nach einem der vorherigen Ansprüche, wobei die Erwärmung in Schritt b) durch Heißluft und/oder ein oder mehrere beheizte Fixierelemente (16), insbesondere beheizte Klammern, erfolgt.

7. Verfahren nach einem der vorherigen Ansprüche, wobei die zumindest abschnittsweise Erwärmung der vorfixierten Anordnung (13) in Schritt c) durch Heißluft und/oder ein oder mehrere beheizte Rollenpaare (21) der Walzenanordnung (18) erfolgt.

8. Verfahren nach einem der vorherigen Ansprüche, wobei die Anordnung (13) in Schritt b) an den zu fixierenden Stellen auf eine Temperatur im Bereich von 30 °C bis 140 °C, bevorzugt von 40 °C bis 100 °C, erwärmt wird und/oder wobei die Anordnung (13) in Schritt c) zumindest abschnittsweise auf eine Temperatur im Bereich von 30 °C bis 140 °C, bevorzugt von 40 °C bis 100 °C, erwärmt wird.

9. Verfahren nach einem der vorherigen Ansprüche, ferner umfassend einen Entlüftungsschritt, bei dem die in Schritt c) erhaltene fixierte Anordnung (17) einem Entlüftungsprozess unter Bildung eines Vorverbunds unterworfen wird, wobei die Entlüftung bevorzugt durch ein Vakuumverfahren erfolgt.

10. Verfahren nach Anspruch 9, ferner umfassend eine Wärme- und/oder Druckbehandlung des nach dem Entlüftungsprozess erhaltenen Vorverbunds zur Bildung des Verbundglases.

11. Verfahren nach einem der vorherigen Ansprüche, wobei in Schritt c) die Anordnung (13) während des Hindurchleitens durch die Walzenanordnung (18) abschnittsweise erwärmt wird.

12. Verfahren nach einem der vorherigen Ansprüche, wobei die Walzenanordnung (18) eine Kalanderwalzenanordnung ist.

13. Verfahren nach einem der vorherigen Ansprüche, wobei das Verbundglas eine Fahrzeugscheibe, bevorzugt eine Kraftfahrzeugscheibe, insbesondere eine Seitenscheibe für ein Fahrzeug, ist.

14. Verfahren nach einem der vorherigen Ansprüche, wobei das Verbundglas ein gebogenes Verbundglas ist.

## Claims

1. Method for producing laminated glass or a precursor thereof using a first glass pane (11) with a thickness of at least 1.4 mm and a second glass pane (12) with a thickness of not more than 1.0 mm, wherein the first glass pane (11) and the second glass pane (12) differ in curvature and/or locally in shape and wherein the method comprises the following steps:
a) aligning an arrangement (13) comprising the first glass pane (11), the second glass pane (12), and at least one laminating film (14) situated between the first and second glass pane by positioning at least one side edge (19) of the arrangement (13) against at least one stop element (15);
b) pre-fixing the aligned arrangement (13) at at least two locations on the positioned side edge (19) of the arrangement (13) by means of one or a plurality of fixing elements (16) and heating, after which the fixing element or elements (16) are removed again; and
c) forming a fixed arrangement (17) by passing the pre-fixed arrangement (13) through a roller arrangement (18) comprising at least one roller pair (20) consisting of two opposing rollers with the pre-fixed side edge (19) of the arrangement (13) ahead, wherein the arrangement (13) is heated at least in sections during passage.

2. Method according to claim 1, wherein the first glass pane (11) used is curved and the second glass pane (12) used is not curved or has less curvature than the first glass pane (11).

3. Method according to one of the preceding claims, wherein the first glass pane (11) has a thickness in the range from 1.4 mm to 5.0 mm, particularly preferably from 1.6 mm to 2.2 mm, and/or the second glass pane (12) has a thickness in the range from 0.3 to 1.0 mm, preferably from 0.5 to 0.8 mm.

4. Method according to one of the preceding claims, wherein the fixing element (16) is a clamp that is optionally heatable.

5. Method according to one of the preceding claims, wherein the roller arrangement (18) has a plurality of roller pairs (20) arranged next to one another and consisting of two opposing rollers, wherein, optionally, at least one roller pair is heatable.

6. Method according to one of the preceding claims, wherein the heating in step b) is done by hot air and/or one or a plurality of heated fixing elements (16), in particular heated clamps.

7. Method according to one of the preceding claims, wherein the heating, at least in sections, of the pre-fixed arrangement (13) in step c) is done by hot air and/or one or a plurality of heated roller pairs (21) of the roller arrangement (18).

8. Method according to one of the preceding claims, wherein in step b), the arrangement (13) is heated, at the locations to be fixed, to a temperature in the range from 30 °C to 140 °C, preferably from 40 °C to 100 °C, and/or wherein in step c), the arrangement (13) is heated, at least in sections, to a temperature in the range from 30 °C to 140 °C, preferably from 40 °C to 100 °C.

9. Method according to one of the preceding claims, further including a deaeration step, in which the fixed arrangement (17) obtained in step c) is subjected to a deaeration process while forming a pre-laminate, wherein the deaeration is preferably done by a vacuum method.

10. Method according to claim 9, further including a heat and/or pressure treatment of the pre-laminate obtained after the deaeration process to form the laminated glass.

11. Method according to one of the preceding claims, wherein in step c), the arrangement (13) is heated in sections during passage through the roller arrangement (18).

12. Method according to one of the preceding claims, wherein the roller arrangement (18) is a calender roller arrangement.

13. Method according to one of the preceding claims, wherein the laminated glass is a vehicle window, preferably a motor vehicle window, in particular a side window for a vehicle.

14. Method according to one of the preceding claims, wherein the laminated glass is a bent laminated glass.

## Revendications

1. - Procédé de fabrication d'un verre feuilleté ou d'un précurseur de celui-ci à l'aide d'une première plaque de verre (11), ayant une épaisseur d'au moins 1,4 mm, et d'une seconde plaque de verre (12), ayant une épaisseur ne dépassant pas 1,0 mm, la première plaque de verre (11) et la seconde plaque de verre (12) différant en ce qui concerne la courbure et/ou, dans des régions locales, en ce qui concernant la forme, et le procédé comprenant les étapes suivantes :
a) aligner un ensemble (13) comportant la première plaque de verre (11), la seconde plaque de verre (12) et au moins un film de stratification (14) situé entre les première et seconde plaques de verre, par positionnement d'au moins un bord latéral (19) de l'ensemble (13) contre au moins un élément de butée (15) ;
b) préfixer l'ensemble aligné (13), en au moins deux emplacements, sur le bord latéral positionné (19) de l'ensemble (13) par un ou plusieurs éléments de fixation (16) et chauffer, après quoi le ou les éléments de fixation (16) sont retirés ; et
c) former un ensemble fixé (17) en faisant passer l'ensemble préfixé (13) à travers un système de rouleaux (18) comportant au moins une paire de rouleaux (20) consistant en deux rouleaux opposés, avec le bord latéral préfixé (19) de l'ensemble (13) devant, ledit ensemble (13) étant chauffé au moins par endroits pendant le passage à travers le système de rouleaux.

2. - Procédé selon la revendication 1, dans lequel la première plaque de verre utilisée (11) est cintrée et la seconde plaque de verre utilisée (12) n'est pas cintrée ou présente une courbure inférieure à celle de la première plaque de verre (11).

3. - Procédé selon l'une des revendications précédentes, dans lequel la première plaque de verre (11) présente une épaisseur dans la plage de 1,4 mm à 5,0 mm, de façon particulièrement préférée de 1,6 mm à 2,2 mm, et/ou la seconde plaque de verre (12) présente une épaisseur dans la plage de 0,3 à 1,0 mm, de préférence de 0,5 à 0,8 mm.

4. - Procédé selon l'une des revendications précédentes, dans lequel l'élément de fixation (16) est une pince, qui est facultativement chauffante.

5. - Procédé selon l'une des revendications précédentes, dans lequel le système de rouleaux (18) présente plusieurs paires de rouleaux (20) disposées côte à côte et consistant en deux rouleaux opposés, au moins une paire de rouleaux étant facultativement chauffante.

6. - Procédé selon l'une des revendications précédentes, dans lequel le chauffage à l'étape b) est effectué par de l'air chaud et/ou par un ou plusieurs éléments de fixation chauffés (16), en particulier des pinces chauffées.

7. - Procédé selon l'une des revendications précédentes, dans lequel le chauffage, au moins par endroits, de l'ensemble préfixé (13) à l'étape c) est effectué par de l'air chaud et/ou par une ou plusieurs paires de rouleaux chauffés (21) du système de rouleaux (18) .

8. - Procédé selon l'une des revendications précédentes, dans lequel, à l'étape b), l'ensemble (13) est chauffé aux emplacements à fixer, à une température dans la plage de 30 °C à 140 °C, de préférence de 40 °C à 100 °C, et/ou dans lequel, à l'étape c), l'ensemble (13) est chauffé, au moins par endroits, à une température dans la plage de 30 °C à 140 °C, de préférence de 40 °C à 100 °C.

9. - Procédé selon l'une des revendications précédentes, comportant en outre une étape de désaération dans laquelle l'ensemble fixé (17) obtenu à l'étape c) est soumis à un processus de désaération avec formation d'un précomposite, la désaération étant, de préférence, réalisée par un procédé sous vide.

10. - Procédé selon la revendication 9, comportant en outre un traitement thermique et/ou par pression du précomposite obtenu après le processus de désaération pour former le verre feuilleté.

11. - Procédé selon l'une des revendications précédentes, dans lequel, à l'étape c), l'ensemble (13) est chauffé par endroits pendant le passage à travers le système de rouleaux (18).

12. - Procédé selon l'une des revendications précédentes, dans lequel le système de rouleaux (18) est un ensemble de rouleaux de calandre.

13. - Procédé selon l'une des revendications précédentes, dans lequel le verre feuilleté est une vitre de véhicule, de préférence une vitre de véhicule automobile, en particulier une vitre latérale pour un véhicule.

14. - Procédé selon l'une des revendications précédentes, dans lequel le verre feuilleté est un verre feuilleté bombé.
